# EUROPÄISCHE PATENTSCHRIFT

(11) **EP 0 407 750 B1**
(45) Veröffentlichungstag und Bekanntmachung des Hinweises auf die Patenterteilung: **11.08.1993**
(21) Anmeldenummer: 90111250.8
(22) Anmeldetag: 14.06.1990
(51) Int. Cl.: F16D 67/06, F16D 35/00

(54) **Flüssigkeitsreibungskupplung**
Liquid friction coupling
Accouplement à friction de liquide

(30) Priorität: 08.07.1989 DE 8908357 U
(43) Veröffentlichungstag der Anmeldung: 16.01.1991
(73) Patentinhaber: Behr GmbH & Co., D-70469 Stuttgart (DE)
(72) Erfinder: Martin, Hans, Dipl.-Ing., D-7000 Stuttgart 1 (DE); Kappeler, Achim, Dipl.-Ing.(FH), D-7107 Neckarsulm (DE)
(74) Vertreter: Wilhelm & Dauster Patentanwälte European Patent Attorneys

(56) Entgegenhaltungen:
- DE-A- 2 110 609
- DE-A- 3 243 967
- GB-A- 2 105 429

## Beschreibung

Die Erfindung betrifft eine Flüssigkeitsreibungskupplung, insbesondere für den Antrieb eines Lüfters des Kühlers einer Verbrennungskraftmaschine von Fahrzeugen, mit einer fest mit einer Antriebswelle gekuppelten Primärscheibe und mit einem drehbar gegenüber dieser angeordneten Kupplungsgehäuse, in dem eine die Primärscheibe einschließende Arbeitskammer angeordnet ist, die durch eine Trennwand von einem Vorratsraum für eine viskose Kupplungsflüssigkeit abgeteilt ist, wobei in der Trennwand eine durch einen von einem ersten Elektromagneten betätigten Ventilhebel verschließbare Übertrittsöffnung zur Zufuhr von Kupplungsflüssigkeit in die Arbeitskammer und im radial äußeren Bereich eine einer Pumpeinrichtung zugeordnete Rückströmöffnung vorgesehen ist.

Eine Flüssigkeitsreibungskupplung dieser Art ist bekannt (DE-U-82 33 338). Bei dieser bekannten Flüssigkeitsreibungskupplung wird der Füllungsgrad in der Arbeitskammer beispielsweise in Abhängigkeit von der Kühlmitteltemperatur gesteuert, die über einen Temperaturfühler beim Erreichen bestimmter Werte den Elektromagneten betätigt, der durch Öffnen des Ventilhebels die Kupplungsflüssigkeit in die Arbeitskammer eintreten läßt und damit die Drehzahl des abgetriebenen Teiles der Kupplung erhöht.

Mit diesem Teil sind die Lüfterflügel verbunden,so daß die Lüfterdrehzahl sich abhängig von der Kühlmitteltemperatur erhöht. Nicht möglich ist es die bei Kupplungen dieser Bauart stets vorhandenen Leerlaufdrehzahlen zu vermeiden, die auch bei geschlossenem Ventilhebel auftreten und die immer für eine gewisse Grundkühlung sorgen, auch wenn diese, beispielsweise beim Kaltanlauf des Motors unerwünscht ist, weil dadurch die Warmlaufphase verlängert wird.

Bekannt ist auch eine Flüssigkeitsreibungskupplung,bei der eine Bremseinrichtung vorgesehen ist, die für den Kaltstart des Motors das Kupplungsgehäuse an einer Drehung hindert und so beim Kaltstart die dann unerwünschte Drehung des Lüfters ausschließt. Bei dieser Bauart (DE-A-34 20 277) wird der Zufluß von Kupplungsflüssigkeit in die Arbeitskammer über eine Bimetallspirale gesteuert, die an der Frontseite des Kupplungsgehäuses sitzt und abhängig von der Temperatur der Kühlluft die Drehzahlregelung des Lüfters übernimmt. Eine von der Kühlmitteltemperatur des Motors direkt abhängige Regelung ist dort nicht möglich. Nicht vorgesehen ist es auch, diese Kupplung dynamisch auf Stillstand zu bremsen, da es sich um eine Feststehbremse handelt.

Der vorliegenden Erfindung liegt daher die Aufgabe zugrunde, eine Flüssigkeitsreibungskupplung der eingangs genannten Art so auszubilden, daß zum einen eine von beliebigen Parametern abhängige Drehzahlregelung der Kupplung durch Steuerung des Füllungsgrades möglich ist und daß in jedem Betriebszustand auch ein dynamisches Abbremsen auf Stillstand erreichbar ist, wenn beliebige - andere - Parameter dies erfordern sollten.

Zur Lösung dieser Aufgabe wird bei einer Flüssigkeitsreibungskupplung der eingangs genannten Art vorgesehen, daß im Bereich einer dem Kupplungsgehäuse zugeordneten Bremse ein zweiter Elektromagnet angeordnet ist, über den die Bremse während des Betriebes der Kupplung zugeschaltet werden kann. Dieser Elektromagnet läßt sich zum Beispiel abhängig von der Kühlluft oder Kühlmitteltemperatur, aber auch abhängig von anderen Parametern betätigen und sorgt dann für das Abbremsen der Kupplung zum Stillstand. Möglich ist es aber auch, eine kurzfristige, aber schnell einzuleitende Drehzahlerniedrigung durch die Abbremsung zu verwirklichen, wenn dies gewünscht ist. Die neue Flüssigkeitsreibungskupplung kann daher wesentlich schneller reagieren als Kupplungen, bei denen eine Drehzahlerniedrigung ausschließlich durch das Abpumpen der Kupplungsflüssigkeit aus der Arbeitskammer erreichbar ist.

Vorteilhafte Weiterbildungen des Gegenstandes der Erfindung sind in den Unteransprüchen gekennzeichnet, wobei die Merkmale der Ansprüche 5 und 6 den Vorteil aufweisen, daß mit einer solchen Schaltung zur Beaufschlagung der Elektromagnete verhindert werden kann, daß die Kupplung bei gefüllter Arbeitskammer für längere Zeit abgebremst wird und auf diese Weise eine unerwünschte Überhitzung auftreten kann.

Die Erfindung ist in der Zeichnung anhand eines Ausführungsbeispieles dargestellt und wird im folgenden erläutert. Es zeigen:
- Fig. 1: einen schematischen Längsschnitt durch eine neuerungsgemäß ausgestaltete Flüssigkeitsreibungskupplung,
- Fig. 2: die schematische Darstellung der mit der neuen Kupplung gegebenen Drehzahlregelungsmöglichkeit anhand eines Diagrammes,
- Fig. 3: die Blockbilddarstellung einer Schaltlogik zur Steuerung der Kupplung,
- Fig. 4: eine beispielsweise diagrammartige Darstellung der Regelungsmöglichkeiten der Lüfterdrehzahl in Abhängigkeit von der Motortemperatur und
- Fig. 5: eine Teildarstellung einer baulichen Variante der Ausbildung der Elektromagnetanordnung der Kupplung nach Fig. 1.

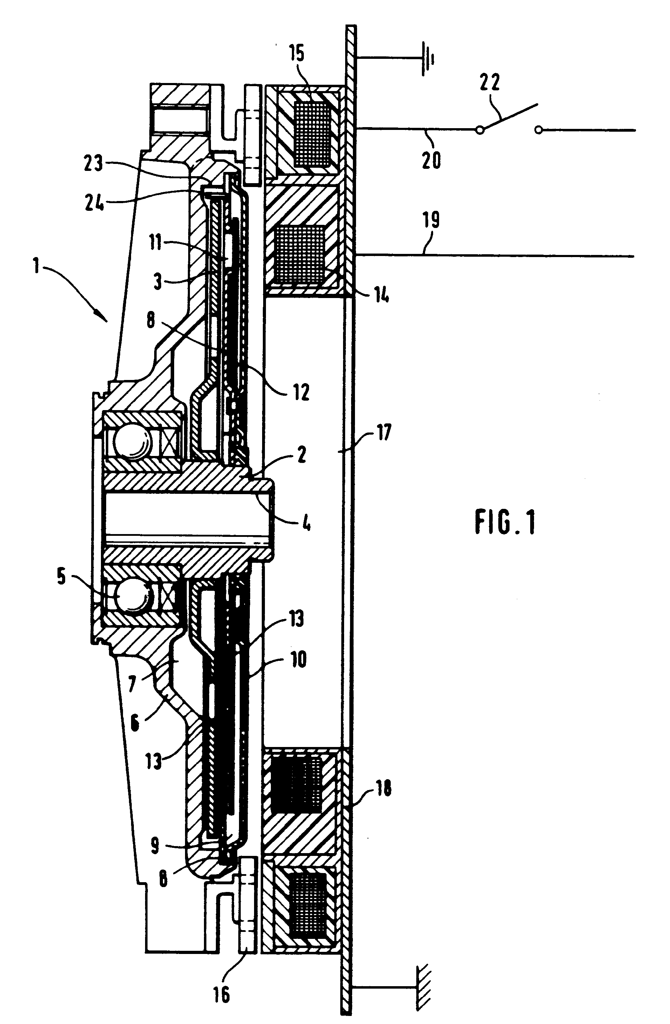

In der Fig. 1 ist eine Flüssigkeitsreibungskupplung (1) gezeigt, die mit einer angetriebenen Nabe (2) versehen ist, auf der fest eine Primärscheibe (3) aufgepreßt ist. Die Nabe (2) wird in nicht näher dargestellter Weise zum Beispiel mit der Antriebswelle einer Wasserpumpe über einen zentralen Schraubbolzen verbunden, der durch die Bohrung (4) der Nabe (2) von links durchgesteckt und in einem Gewinde der Wasserpumpenwelle verschraubt ist. Auf der Nabe (2) ist über ein Kugellager (5) ein Kupplungsgehäuse (6) gelagert, in dem eine Arbeitskammer (7) ausgebildet ist, welche die Primärscheibe (3) in ihrem radial außen liegenden Bereich mit einem Spalt eng umgibt, der in bekannter Weise nach dem Füllen der Arbeitskammer (7) mit einer viskosen Kupplungsflüssigkeit als Scherspalt wirkt.Die Arbeitskammer (7) ist über eine Trennwand (8) von einem Vorratsraum (9) getrennt, der durch das Aufsetzen eines Deckels (10) auf das Kupplungsgehäuse (6) gebildet wird. In diesem Vorratsraum (9) befindet sich viskose Kupplungsflüssigkeit. In der Trennwand (8) ist im Bereich des Scherspaltes zwischen der Primärscheibe (3) und der Arbeitskammer (7) eine Öffnung (11) vorgesehen, die von einem Ventilhebel (12) verschlossen wird, der aus einem magnetischen Material besteht und an der Trennwand im Bereich (13) jeweils durch Nieten o.dgl. befestigt ist. Dieser Ventilhebel (12) kann durch einen ersten Elektromagneten (14) aus seiner dargestellten Lage, in der er unter der ihm innewohnenden Federkraft auf die Öffnung (11) gedrückt wird, nach rechts verschwenkt werden, wenn der Elektromagnet (14) strombeaufschlagt wird. Es wird damit eine Verbindung zwischen der Vorratskammer (9) und der Arbeitskammer (7) hergestellt. Kupplungsflüssigkeit kann in die Arbeitskammer (7) und in den Scherspalt eintreten. Die Drehzahl des abgetriebenen Kupplungsgehäuses (6) erhöht sich dadurch. An diesem Kupplungsgehäuse (6) werden in nicht näher gezeigter, weil bekannter Weise, die Flügel eines Lüfters angebracht. Durch Strombeaufschlagung des Elektromagneten (14) erhöht sich daher die Lüfterdrehzahl.

Als nicht gezeigte Variante kann der Ventilhebel (12) in geöffneter Stellung vorgespannt sein und dann bei Strombeaufschlagung des Elektromagneten (14), z.B. über einen Umlenkhebel, die Öffnung (11) verschließen. In diesem Fall vermindert sich daher bei Beaufschlagung des Elektromagneten (14) die Lüfterdrehzahl.

Fest mit dem ringförmigen Elektromagnet (14) ist ein diesen Elektromagneten konzentrisch umgebender, zweiter Elektromagnet (15) angeordnet, der im Bereich einer an dem Kupplungsgehäuse (6) befestigten Bremsscheibe (16) angeordnet ist. Zwischen dem Elektromagnet (15) und der Bremsscheibe (16) wird ein vorgegebener Luftspalt eingestellt. Die Bremsscheibe (16) kann in an sich bekannter Weise an einer axial beweglichen Ankerscheibe angebracht sein, die beispielsweise an einer Federscheibe mit Speichen angebracht ist, die eine elastische axiale Verformung erlauben, in Umfangs- und Drehrichtung dagegen relativ steif sind. Durch Beaufschlagung des Elektromagneten (15) kann daher das Kupplungsgehäuse (6) abgebremst werden.

Die beiden Elektromagneten (14 und 15) sind in einem gemeinsamen Gehäusering (17) untergebracht, der, wie bei (18) schematisch angedeutet ist, ortsfest hinter der Kupplung (1) angebracht wird.

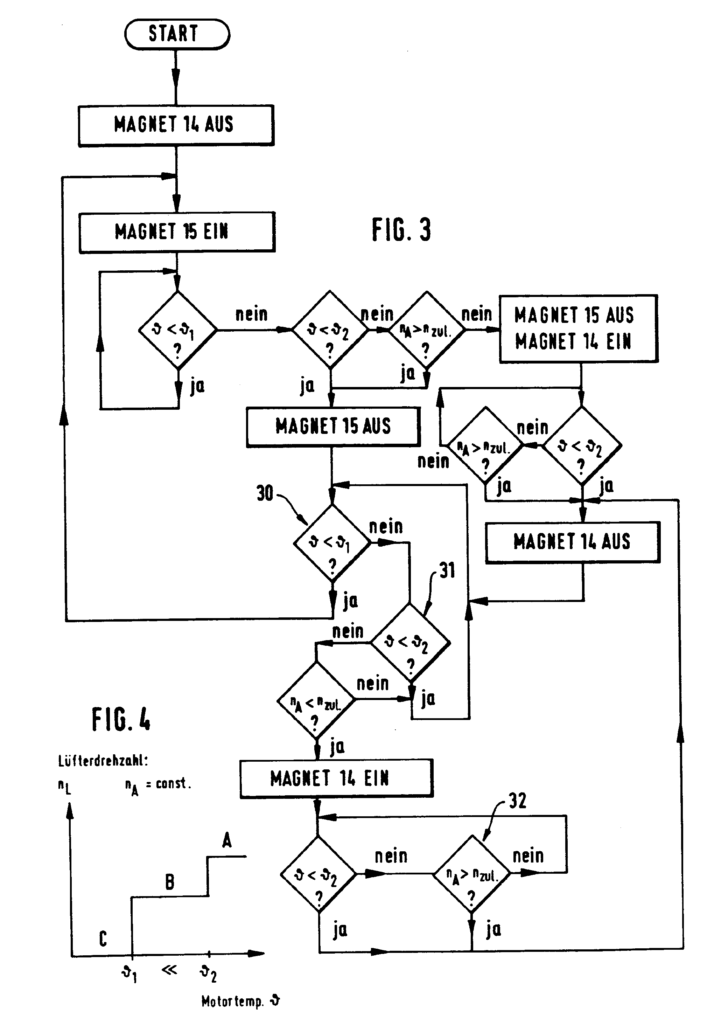

Beide Elektromagneten (14 und 15) stehen mit elektrischen Leitungen (19 bzw. 20) in Verbindung, die Teil einer nicht näher dargestellten Schaltung sind, die auf der Schaltlogik der Fig.3 beruht. Diese Schaltlogik sorgt dafür, daß bei Unterbrechung der Strombeaufschlagung des Elektromagneten (14) der Schalter (22) in der Stromleitung (20) erst dann geschlossen wird, wenn die Kupplungsflüssigkeit aus der Arbeitskammer (7) in den Vorratsraum, zumindest zum größten Teil zurückgepumpt ist. Dann leitet der zweite Elektromagnet (15) die Bremsung ein.

Das Zurückpumpen von Kupplungsflüssigkeit aus der Arbeitskammer (7) in den Vorratsraum (9) geschieht beim Ausführungsbeispiel in an sich bekannter Weise über eine im radial äußersten Bereich und außerhalb der Primärscheibe (3) angeordnete Rücklaufbohrung (23), in die ein Staukörper (24) hereinragt. Durch diese Schaltungsmaßnahme ist die Gewähr dafür gegeben, daß das Kupplungsgehäuse (6) nicht abgebremst werden kann,wenn die Arbeitskammer (7) voll Kupplungsflüssigkeit ist und daher der maximale Antrieb für den Lüfter erfolgt. Dies ist insbesondere für schwere Lüfterantriebe von Bedeutung, und für solche, die mit hohen Antriebsdrehzahlen laufen. Hier würde, wenn aus den vollen Drehzahlen bis zum Stillstand abgebremst werden würde,die Abnützung der Bremsscheibe zu groß sein. Außerdem würde die sowohl an der Bremsscheibe als auch in der Arbeitskammer entstehende Reibungswärme zu einem kaum beherrschbaren Wärmestau führen. Die vorgesehene Schaltung sieht daher zunächst das Abkuppeln des Lüfterantriebes durch Rückpumpen der Flüssigkeit und erst dann die Möglichkeit der Abbremsung vor.

Es wäre allerdings auch möglich, die elektrische Schaltung zur Beaufschlagung der beiden Elektromagneten (14 und 15) so auszulegen, daß zwar ein kurzfristiges Betätigen des zweiten Elektromagneten (15) möglich ist, so daß ein schnelles Abfallen der Lüfterdrehzahl möglich wäre, ohne daß jedoch ein Abbremsen zum Stillstand erfolgt. Die kurzzeitige Betätigung des Elektromagneten (15) hätte den Vorteil, daß eine wesentlich höhere Ansprechgeschwindigkeit für die Beeinflussung der Kupplungsdrehzahl möglich ist, die nicht von dem relativ trägen Abpumpvorgang der Kupplungsflüssigkeit abhängig ist. Auch das gleichzeitige Abpumpen der Kupplungsflüssigkeit aus der Arbeitskammer und ein Abbremsen wäre möglich.

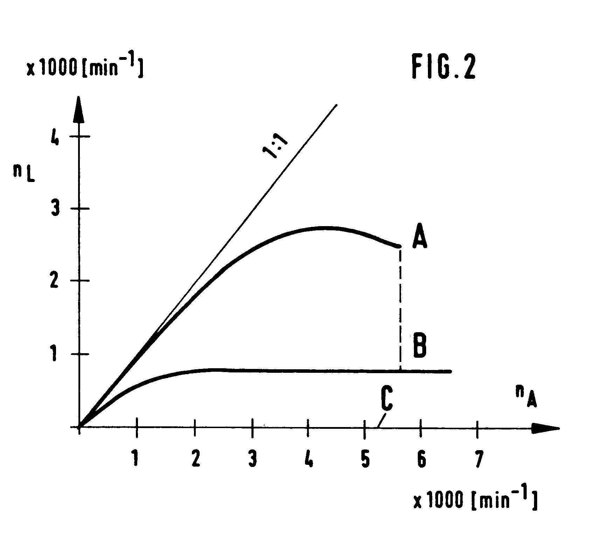

Fig. 2 zeigt die Steuermöglichkeit der neuen Flüssigkeitsreibungskupplung. Die Kurve (A), die über der Antriebsdrehzahl (n_{A}) aufgetragen ist, zeigt den Verlauf der Lüfterdrehzahl (n_{L}) bei maximaler Kühlung. Die Lüfterdrehzahl (n_{L}) kann durch Be einflussung des Füllungsgrades der Kupplung bis zur Kurve (B) variiert werden. Diese Kurve (B) stellt den nicht zu unterschreitenden Bereich der Grundkühlung einer Flüssigkeitsreibungskupplung dar, die bedingt ist durch die Leerlaufdrehzahl, die beim Ausführungsbeispiel etwa bei 800 oder 900 Umdrehungen pro Minute liegt. Die neue Kupplung erlaubt aber auch durch Betätigung des zweiten Elektromagneten (15) das Abbremsen auf die Kurve (C) zum Stillstand der Kupplung, wenn dies erforderlich ist. Dies kann beispielsweise beim Kaltstart des Motors erwünscht sein, wo der Drehzahlverlauf nach der Kurve (B) - also bei weitgehend leerer Arbeitskammer (7) - zu einer unerwünschten Verlängerung der Warmlaufphase des Motores führen würde. Die neue Kupplung kann, je nach Kühlungsbedarf, eine von der Antriebsdrehzahl unabhängige Hin- und Herschaltung zwischen den drei gezeigten Kurven (A, B, C) verwirklichen. Der Lüfter kann selbst aus der maximalen Lüfterdrehzahl heraus bis zum Stillstand gebremst werden. Dabei wird, wie bereits ausgeführt,dafür gesorgt, daß der Bremsvorgang in zwei Schritten erfolgt:

Zunächst wird durch Ausschalten des Elektromagneten (14) die Lüfterdrehzahl auf die Leerlaufdrehzahl gemäß der Kurve (B) gesenkt und anschließend kann durch Betätigung des zweiten Elektromagneten (15) die Kupplung zum Stillstand gebremst werden.

Die Fig. 3 zeigt eine Schaltlogik, nach der die Kupplung der Fig. 1 betrieben werden kann. In der Schaltlogik sind die Bezugszeichen 14 und 15 für den ersten bzw. zweiten Elektromagneten verwendet, die übrigen, von der Schaltlogik verwerteten Ausgangsdaten sind folgende:
ϑ momentane Motortemperatur, ϑ 1 und ϑ 2 vorgegebene Schalttemperaturen; n_{A} momentane Antriebsdrehzahl; n_{zul} vorgegebene maximal zulässige Antriebsdrehzahl bis zu der die Kupplung noch vollkommen zugeschaltet sein darf.

Die Schaltlogik betrifft dabei die in der Fig. 1 auch gezeigte Ausführung, bei der der Ventilhebel (12) stromlos geschlossen ist, d.h. bei Nichtbeaufschlagung des Elektromagneten (14) die Öffnung (11) geschlossen hält.

Wie Fig. 3 zu entnehmen ist, ist zunächst beim Start der Magnet (14) ausgeschaltet, der Magnet (15) dagegen eingeschaltet. Die Kupplung ist daher abgebremst und steht still.

Die erste Abfrage der Schaltlogik stellt fest, ob die momentane Motortemperatur kleiner als die erste der vorgegebenen Schalttemperaturen ist. Ist dies der Fall,so bleibt es beim Ausgangszustand der Kupplung. Ist dies nicht mehr der Fall, so wird die zweite Abfrage gemacht, nämlich ob die momentane Motortemperatur noch kleiner als die zweite vorgegebene Schalttemperatur ist. Ist dies der Fall, so befindet sich die Motortemperatur also im Intervall zwischen den vorgegebenen Schalttemperaturen (ϑ1 und ϑ2), und es wird der Magnet (15) ausgeschaltet, so daß die Kupplung mit der Leerlaufdrehzahl betrieben werden kann, so lange die Motortemperatur in diesem Intervall zwischen den vorgegebenen Schalttemperaturen bleibt. Sinkt sie ab, so wird wieder der Zustand der Ausgangssituation hergestellt. Der Magnet (15) schaltet wieder ein.

Stellt die Abfrage, ob die momentane Motortemperatur (ϑ) kleiner ist als (ϑ2) fest, daß dies nicht der Fall ist, so wird weiter noch abgefragt, ob die momentane Antriebsdrehzahl größer als die vorgegebene maximal zulässige Antriebsdrehzahl ist. Ist dies der Fall, dann bleibt es bei dem vorbeschriebenen Schaltzustand, ist dies nicht der Fall, dann wird zwar der Magnet (15) ausgeschaltet, aber es schaltet der Magnet (14) ein, so daß der Ventilhebel (12) geöffnet wird und der Lüfter über die Kupplung anläuft. Eine nachgeschaltete Temperaturabfrage stellt fest, ob die momentane Motortemperatur inzwischen kleiner geworden ist als die zweite vorgegebene Schalttemperatur. Ist dies der Fall, dann wird der Magnet (14) wieder ausgeschaltet.

Der Magnet (14) schaltet auch dann aus, falls zwar die Motortemperatur nicht kleiner (ϑ2) ist, die Antriebsdrehzahl aber größer als die zulässige ist.

Dem Abfrageschritt (30), in dem festgestellt wird, ob die momentane Motortemperatur kleiner ist als die erste Schalttemperatur (ϑ1), ist ein weiterer Abfrageast für den Fall nachgeschaltet, daß dies nicht mehr der Fall ist. Es wird dann, siehe Schaltschritt (31) abgefragt, ob die Motortemperatur (ϑ) kleiner ist als die zweite Schalttemperatur (ϑ2). Ist dies nicht der Fall, dann erfolgt die Überprüfung, ob die Antriebsdrehzahl (n_{A}) kleiner ist als die zulässige Drehzahl (n_{zul}), ist auch dies der Fall, dann wird der Magnet (14) eingeschaltet und der Lüfter läuft an, so lange, bis in dem wiederum nachgeschalteten Schaltschritt (32) festgestellt wird, daß die Antriebsdrehzahl größer als die zulässige Antriebsdrehzahl ist oder die momentane Motortemperatur (ϑ) wieder kleiner ist als (ϑ2), dann wird der Magnet (14) wieder ausgeschaltet.

Es ergibt sich mit dieser Schaltlogik das in Fig. 4 diagrammartig dargestellte Schaltverhalten der Kupplung nach Fig. 1. Es ist zu erkennen, daß die Lüfterdrehzahl in drei Stufen geregelt wird, die abhängig sind, von den vorgegebenen Schalttemperaturen (ϑ1) und (ϑ2). Wenn die Motortemperatur diese Temperaturen jeweils überschreitet, läuft die Kupplung - wie anhand der Fig. 2 schon beschrieben ist - mit der Grundkühlung im Bereich (B) und im Bereich (A) mit der maximalen Kühlleistung, die allerdings durch Beeinflussung des Kühlungsgrades der Kupplung variierbar ist. Im Bereich (C) ist die Kupplung abgebremst. Im Bereich (B) läuft sie mit einer Grundkühlung, die beim Ausführungsbeispiel etwa bei 800 oder 900 Umdrehung pro Minute liegt. Im Bereich (A) wird die Lüfterdrehzahl zur Erreichung der maximalen Kühlung erhöht. Je nach Motortemperatur schaltet die Kupplung daher zwischen den Bereichen (A, B und C) hin und her.

Durch diese Schaltweise wird es möglich, die Dimensionen und die Leistungsaufnahme des Elektromagneten (15) sehr gering zu halten. Da die Kupplungsflüssigkeit abgepumpt ist, wird nur noch ein geringes Restantriebsmoment übertragen.

Die neue Flüssigkeitsreibungskupplung gestattet es aber auch, die ganze Kupplung selbst durch Abbremsen vor der Entstehung unzulässig großer Schlupfwärme zu schützen. Die Zwangsabschaltung kann dabei durch ein entsprechendes Steuergerät über die Antriebsdrehzahl vorgenommen werden.

Da der erste Elektromagnet (14) und der zweite Elektromagnet (15) in einem gemeinsamen Ring (17) fest angeordnet sind, ist es lediglich notwendig, bei der Montage den Luftspalt zwischen dem Elektromagneten (15) und der Ankerplatte mit der Bremsscheibe (16) einzustellen. Die Einstellung des Luftspaltes zwischen Elektromagnet (14) und Ventilhebel (12) ergibt sich dann selbsttätig. Vorteilhaft ist auch, daß der Ring (17) nur einen Masseanschluß aufzuweisen braucht.

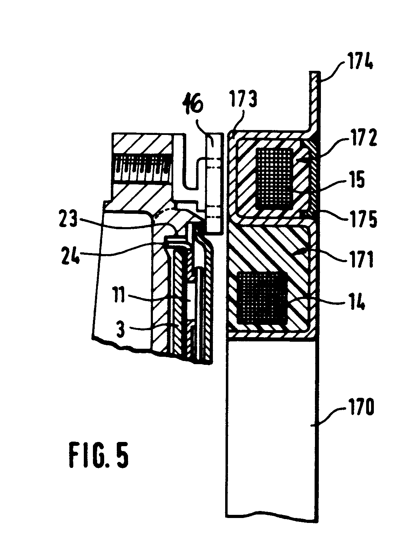

Die Fig. 5 schließlich zeigt eine bauliche Variante der Kupplung nach Fig. 1. Im Gegensatz zu der Bauart nach Fig. 1, bei der die gemeinsame Halterung (17) aus einem spanlos hergestellten oder durch spanabhebende Bearbeitung erzeugten Ring besteht, ist der Tragring (170) der Fig. 5 als ein Tiefziehteil ausgebildet, das ein ringförmig umlaufendes S-Profil aufweist, dessen innerer Teil (171) zu der Kupplung (1) hin offen ist und mit dem Elektromagneten (14) versehen ist, der mit Isoliermaterial umgossen ist. Der Teil (172) des Tragringes (117) ist zur Kupplung und zur Bremsscheibe (16) hin geschlossen ausgebildet und besitzt eine Abschlußwand (173), die als Bremsfläche mit der Bremsscheibe (16) zusammenwirkt. Der Tiefziehteil (170) besitzt außerdem einen mit angeformten umlaufenden Rand (174), mit dem die als Ring ausgebildete Halterung (170) ortsfest gehalten werden kann. In dem Teil (172) der Halterung (170) sitzt der ebenfalls mit Isoliermaterial umgebene Elektromagnet (15). Dieser Teil (172) ist nach außen durch einen Ringdeckel (175) abgeschlossen. Die in der Fig. 5 gezeigte Variante für die Halterung (170) ist äußerst einfach herstellbar, aber der notwendigen Funktion angepaßt.

## Patentansprüche

1. Flüssigkeitsreibungskupplung, insbesondere für den Antrieb eines Lüfters des Kühlers einer Verbrennungskraftmaschine von Fahrzeugen,mit einer fest mit einer Antriebswelle gekuppelten Primärscheibe (3) und mit einem drehbar gegenüber dieser angeordneten Kupplungsgehäuse (6),in dem eine die Primärscheibe einschließende Arbeitskammer (7) angeordnet ist, die durch eine Trennwand (8) von einem Vorratsraum (9) für eine viskose Kupplungsflüssigkeit abgeteilt ist, wobei in der Trennwand eine durch einen von einem ersten Elektromagneten (14) betätigten Ventilhebel (12) verschließbare Obertrittsöffnung (11) zur Zufuhr von Kupplungsflüssigkeit in die Arbeitskammer (7) und im radial äußeren Bereich eine einer Pumpeinrichtung (24) zugeordnete Rückströmöffnung (23) vorgesehen ist, dadurch gekennzeichnet, daß im Bereich einer dem Kupplungsgehäuse (6) zugeordneten bremse (16) ein zweiter Elektromagnet (15) angeordnet ist, über den die bremse (16) während des Betriebes der Kupplung (1) zugeschaltet werden kann.

2. Flüssigkeitsreibungskupplung nach Anspruch 1, dadurch gekennzeichnet, daß der zweite Elektromagnet (15) konzentrisch um den ersten Elektromagneten (14) herum angeordnet ist.

3. Flüssigkeitsreibungskupplung nach Anspruch 1, dadurch gekennzeichnet, daß beide Elektromagneten (14 und 15) ortsfest in einer gemeinsamen Halterung (17) vor dem Kupplungsgehäuse (6) angeordnet sind.

4. Flüssigkeitsreibungskupplung nach Anspruch 1, dadurch gekennzeichnet, daß die gemeinsame Halterung als ein Tiefziehteil (170) ausgebildet ist.

5. Flüssigkeitsreibungskupplung nach Anspruch 3 oder 4 mit einer Nabe (2) zur Lagerung des Kupplungsgehäuses (6) die von einem Befestigungsbolzen durchgriffen ist, dadurch gekennzeichnet, daß beide Elektromagneten (14, 15) auf der Befestigungsseite der Kupplung angeordnet und so nahe wie möglich an das Kupplungsgehäuse (6) angenähert sind.

6. Flüssigkeitsreibungskupplung nach Anspruch 1, dadurch gekennzeichnet, daß beide Elektromagneten (14, 15) mit einer Schaltung verbunden sind, welche die dauernde Aktivierung der Bremse über den zweiten Elektromagneten (15) blockiert, solange sich der Ventilhebel (12) in geöffneter Stellung befindet.

## Claims

1. A fluid friction clutch, particularly to drive a fan for the radiator of an internal combustion engine of vehicles having a primary plate (3) rigidly coupled to a drive shaft and with, adapted to rotate in relation to said primary disc (3), a clutch housing (6) in which there is, containing the primary disc, a working chamber (7) which is separated by a partition (8) from a storage space (9) containing a viscous clutch fluid, said partition comprising a transfer aperture (11) adapted to be closed by a valve lever (12) actuated by a first electromagnet (14) and adapted to supply clutch fluid to the working chamber (7) and also having in the radially outer area a return flow aperture (23) associated with pump means (24), characterised in that in the region of a brake (16) associated with the clutch housing (6) there is a second electromagnet (15) via which the brake (16) can be cut in while the clutch (1) is being operated.

2. A fluid friction clutch according to Claim 1, characterised in that the second electromagnet (15) is disposed concentrically around the first electromagnet (14).

3. A fluid friction clutch according to Claim 1, characterised in that both electromagnets (14 and 15) are disposed rigidly in a common support (17) in front of the clutch housing (6).

4. A fluid friction clutch according to Claim 1, characterised in that the common support is constructed as a deep-drawn part (170).

5. A fluid friction clutch according to Claim 3 or 4, having a hub (2) for mounting the clutch housing (6) and through which a fixing bolt passes, characterised in that both electromagnets (14, 15) are disposed on the fixing side of the clutch and are situated as close as possible to the clutch housing (6).

6. A fluid friction clutch according to Claim 1, characterised in that both electromagnets (14, 15) are connected to a circuit which blocks continual activation of the brake via the second electromagnet (15) so long as the valve lever (12) is in the open position.

## Revendications

1. Accouplement à friction de liquide, essentiellement pour l'entraînement d'un ventilateur de radiateur d'un moteur à combustion interne de véhicules, avec un disque primaire (3) accouplé solidairement à un arbre primaire et avec une cage d'accouplement (6) disposée de façon rotative en regard du disque primaire et dans laquelle est disposée une chambre de travail (7) entourant le disque primaire, séparée par une paroi (8) d'un réservoir (9) pour un liquide d'accouplement, une ouverture de transfert (11) obturable par un culbuteur (12) actionné par une première électrovanne (14) pour le transfert de liquide d'accouplement dans la chambre de travail (7) étant prévue dans la paroi de séparation et dans la zone radiale extérieure une ouverture de refoulement (23) coordonnée à un dispositif de pompe (24), caractérisé en ce que dans la zone d'un frein (16), solidaire de la cage d'accouplement (6) est disposée une deuxième électrovanne (15) à travers laquelle le frein (16) peut être connecté pendant le fonctionnement de l'accouplement (1).

2. Accouplement à friction de liquide selon la revendication 1, caractérisé en ce que la deuxième électrovanne (15) est disposée de façon concentrique autour de la première électrovanne (14).

3. Accouplement à friction de liquide selon la revendication 1, caractérisé en ce que les deux électrovannes (14 et 15) sont disposées à demeure dans un support commun (17) devant la cage d'accouplement (6).

4. Accouplement à friction de liquide selon la revendication 1, caractérisé en ce que le support commun est une pièce emboutie (170).

5. Accouplement à friction de liquide selon la revendication 3 ou 4 avec un moyeu (2) pour le montage de la cage d'accouplement (6) et qui est traversé d'un boulon de fixation, caractérisé en ce que les deux électrovannes (14, 15) sont disposées du côté de fixation de l'accouplement et le plus proche possible de la cage d'accouplement (6)

6. Accouplement à friction de liquide selon la revendication 1, caractérisé en ce que les deux électrovannes (14, 15) sont connectées à un circuit bloquant l'activation permanente du frein à travers la deuxième électrovanne (15), tant que le culbuteur (12) se trouve en position ouverte.
